Europäisches Patentamt

European Patent Office

Office européen des brevets

(19)

(11) Veröffentlichungsnummer: **0 139 905**

**A2**

## (12) EUROPÄISCHE PATENTANMELDUNG

(21) Anmeldenummer: 84109103.6

(22) Anmeldetag: 01.08.84

(51) Int. Cl.⁴: **B 60 B 21/10**
**B 60 C 15/02**

(30) Priorität: 03.09.83 DE 3331870

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: Continental Gummi-Werke
Aktiengesellschaft
Königsworther Platz 1
D-3000 Hannover 1(DE)

(72) Erfinder: Mauk, Gerhard, Dipl.-Ing.
Bleichenstrasse 49 A II
D-3050 Wunstorf 2(DE)

(72) Erfinder: Rach, Heinz-Dieter
Planetenring 32
D-3008 Garbsen 1(DE)

(72) Erfinder: Frerichs, Udo
Buchenweg 7
D-3012 Langenhagen 8(DE)

(54) Fahrzeugrad.

(57) Die Erfindung bezieht sich auf ein luftbereiftes Fahrzeugrad mit einer starren Tiefbettfelge und mit einem Reifen, bei dem die Felge sich im wesentlichen radial nach innen erstreckende Felgenhörner und neben diesen am radial inneren Umfang Sitzflächen für den Reifen und neben den Sitzflächen Montagevertiefungen (Hochbett) aufweist, die von den Seitenwänden des Tiefbetts begrenzt werden und bei dem radial außen neben dem Tiefbett Notlaufstützflächen vorhanden sind. Zur Erhöhung der Formstabilität der Felge und als Schutz für den Reifen wird vorgeschlagen, daß von zumindest einer der Wände des Tiefbettes ein Schutzring ausgeht, dessen Wand in Querrichtung im wesentlichen nach axial außen verläuft und den Reifenwulst gegen Bremswärmeeinstrahlung schützt.

FIG. 1

EP 0 139 905 A2

Continental Gummi-Werke AG, Hannover

Fahrzeugrad

Die Erfindung betrifft ein luftbereiftes Fahrzeugrad mit einer starren Tiefbettfelge und mit einem Fahrzeugluftreifen aus Gummi oder gummiähnlichen Kunststoffen, der eine Karkasse aufweist, die in den Wülsten durch Umschlingen von zug- und druckfesten Wulstkernen verankert ist, bei dem die Felge sich im wesentlichen radial nach innen erstreckende Felgenhörner und neben diesen am radial inneren Umfang Sitzflächen für den Reifen und neben den Sitzflächen Montagevertiefungen (Hochbett) aufweist, die von den Seitenwänden des Tiefbetts begrenzt werden, bei dem die die Montagevertiefungen bildenden Teile des Felgenkranzes auf der radial äußeren Seite als Notlaufstützflächen ausgebildet sind und bei dem die Reifenwände sich von den Wulstkernen aus zunächst im wesentlichen waagerecht nach außen erstrecken.

Ein solches Fahrzeugrad wird z.B. in der DE-OS 30 00 428 beschrieben. Die Erfindung befaßt sich mit einem Fahrzeugrad, das für einen Notlauf gut geeignet ist, d.h. selbst bei einem Defekt ist der Reifen im begrenzten Einsatz rollfähig, ohne dauerhaften Schaden zu nehmen.

Der Erfindung liegt die Aufgabe zugrunde, das bekannte Fahrzeugrad dahingehend zu optimieren, daß die Fahreigenschaften von Reifen und Felge bei einem normalen Fahrbetrieb durch die Ausbildung zu einem Notlaufrad nicht beeinträchtigt werden. Insbesondere ist dafür zu sorgen, daß die radial innen auf der Felge befindlichen Reifenwülste nicht durch übermäßige Bremswärmeeinwirkung geschädigt werden.

Zur Lösung dieser Aufgabe wird erfindungsgemäß vorgeschlagen, daß von zumindest einer der Wände des Tiefbettes ein Schutzring ausgeht, dessen Wand in Querrichtung im wesentlichen nach axial außen verläuft und den Reifenwulst gegen Bremswärmeeinstrahlung schützt.

Mit der Erfindung wird außer einem zuverlässigen Wärmeschutz für den am meisten gefährdeten Reifenwulst oder für beide der Vorteil einer erhöhten Formstabilität der Felge erzielt. Die hohe Formstabilität bei gleichzeitig geringem Gewicht resultiert unter anderem auch aus dem Vorsehen eines relativ flachen Tiefbetts mit im wesentlichen senkrechten Seitenwänden und einem in Querrichtung geneigten Tiefbettboden.

Wegen der Flachheit des Tiefbetts, das für die Reifenmontage nicht benötigt wird, ergibt sich ein großer Einbauraum für die Bremsen, der dadurch noch optimiert werden kann, daß die Felgenschüssel seitlich auf Höhe des einen Felgenhorns angeordnet wird, wobei der Schutzring in Verlängerung des Tiefbettbodens direkt in die Felgenschüssel übergeht.

Gemäß einer weiteren bevorzugten Ausführungsform weist die Felge auf beiden Seiten einen Schutzring auf, so daß beide Reifenwülste gegenüber den Bremsbelägen bzw. Bremsscheiben abgeschirmt sind und damit vor Wärmeeinstrahlung, Funkenflug, Bremsbelagrückständen u.s.w. geschützt sind.

Um eine einfache Montage des Reifens zu gewährleisten, sollten die Schutzringe vom jeweiligen Felgenhorn einen Abstand aufweisen, der der 1,5- bis dreifachen Wulstdicke entspricht. Zur Montage des Reifens dienen neben den Sitzflächen für den Reifen angeordnete Vertiefungen (Hochbetten), für die eine Breite ausreicht, die der Breite der Sitzflächen entspricht und die in Fortsetzung der Neigung der Sitzflächen unter gleichem Winkel geneigt sein können. Durch die Verwendung einer Felge mit umgebördelten Rändern, bei der die Felgenhörner und die Sitzflächen von diesen Rändern gebildet werden, wird

der Vorteil erzielt, daß unter Beibehaltung der Stützflächenbreite für die Hochbetten eine größere Tiefe erhalten wird, so daß sich die Reifenmontage vereinfacht.

Um ein seitliches Auslenken des Reifens bei einem Notlauf zu verhindern, wird vorgeschlagen, den Reifen in dem Innenwandbereich, der bei einem Notlauf zwischen den Stützflächen liegt, mit einer als Führung dienenden Wandverdickung zu versehen, die sich bei einem Notlauf in das flache Tiefbett absenken kann.

Um unter Beibehaltung des radial außen gelegenen relativ flachen Tiefbetts ausreichend breite Notlaufstützflächen zu erhalten, wird vorgeschlagen, daß die die Sitzflächen für den Reifen und die Felgenhörner bildenden Teile des Felgenkranzes auf der radial äußeren Seite ebenfalls als Notlaufstützflächen ausgebildet sind. Dabei können die Notlaufstützflächen insgesamt in Querrichtung leicht gewölbt oder gerade verlaufen, im letzteren Fall waagerecht oder leicht nach außen abfallend. Dadurch, daß der Reifen auf der radial inneren Seite der Felge befestigt ist und weiterhin von seinen Wulstkernen aus sich im wesentlichen waagerecht nach außen erstreckt, ist ein Ausbiegen der Seitenwände bei einem Notlauf möglich, ohne daß irgenwo scharfe Knickstellen entstehen können.

Nachfolgend werden mehrere Ausführungsbeispiele anhand einer Zeichnung erläutert.

Es zeigt

Fig. 1 ein Fahrzeugrad, bei dem die Felge einen Schutzring mit einer seitlich angeordneten Felgenschüssel und leicht gewölbte Notlaufstützflächen aufweist, in einem radialen Teilschnitt,

Fig. 2 ein Fahrzeugrad, bei dem die Felge mit einem Schutzring und einer mittig angeordneten Felgenschüssel ausgestattet ist, in einem radialen Teilschnitt,

Fig. 3 das Rad gemäß Fig. 2 im Bereich Tiefbettboden /
Felgenschüssel in einer Seitenansicht,

Fig. 4 ein Fahrzeugrad mit beidseitigen Schutzringen an
der Felge in einem radialen Teilschnitt,

Fig. 5 ein Fahrzeugrad, bei dem die Ränder der Felge
umgebördelt sind und der Reifen eine als Führung
dienende Reifeninnenwandverdickung aufweist, mit
einem geneigten Tiefbett und einem einseitig an
der Felge befindlichen Schutzring in einem radialen
Teilschnitt.

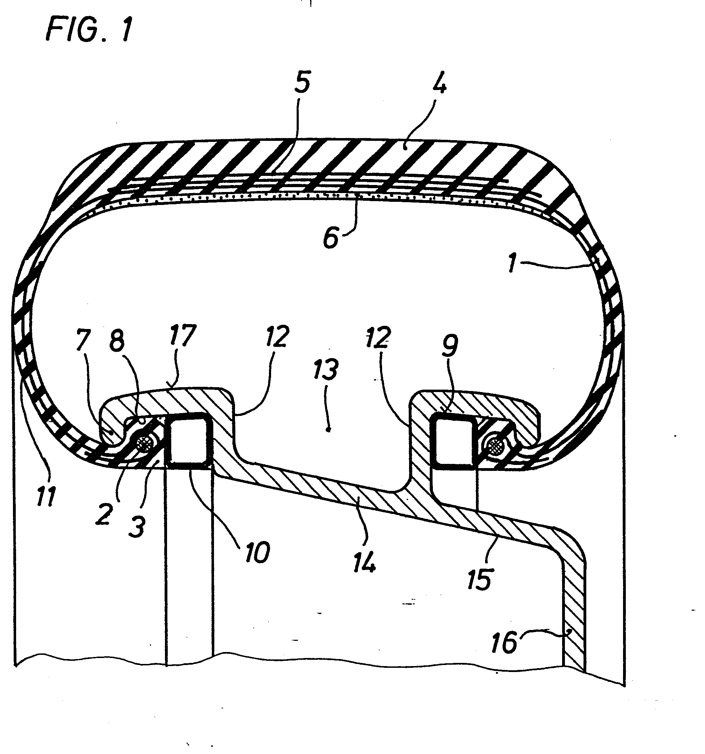

In Fig. 1 ist ein Fahrzeugrad im montierten Zustand dargestellt. Der
verwendete Fahrzeugluftreifen, der im wesentlichen aus Gummi oder
gummiähnlichen Stoffen besteht, weist eine Radialkarkasse 1 auf
- gegebenenfalls kann es auch eine Winkelkarkasse sein -, die mit
ihren Enden durch Umschlingen von zug- und druckfesten Wulstkernen 2 in den
Wülsten 3 verankert ist. Unterhalb vom Laufstreifen 4 zwischen diesem
und der Karkasse 1 befindet sich ein in Umfangsrichtung zugfester,
aus zwei oder mehreren Cordgewebelagen bestehender Gürtel 5, der die
Seitenstabilisierung des Reifenkörpers bewirkt. Der Reifenkörper weist
zudem an seiner Innenfläche etwa in dem Bereich des Laufstreifens 4
eine dünne Gleitschicht 6 auf, die ein reibungsarmes Abstützen auf
der Felge bei einem Notlauf ermöglicht, zusätzlich aber auch noch als
Dichtungsschicht im Falle von Perforationen dienen kann.

Der bevorzugt aus Metall bestehende Felgenkranz dient zur Halterung
der Reifenwülste 3 und zur Abstützung des Reifens bei einem Notlauf.
Der Felgenkranz weist im Querschnitt gesehen seitlich außen je ein
Felgenhorn 7 auf, das sich im wesentlichen radial nach innen erstreckt.
Am inneren Umfang des Felgenkranzes liegt in axialer Richtung innen
neben jedem Felgenhorn 7 eine Sitzfläche 8 für den Reifenwulst 3, die
im Querschnitt in Querrichtung gerade verläuft und gegenüber der
Axialrichtung unter einem Winkel von 5 bis 15$^{\text{o}}$ geneigt sein kann, und zwar in der Weise, daß der kleinere Durchmesser sich neben dem Felgenhorn 7 befindet, während der größte Felgeninnendurchmesser im Bereich der Sitzfläche 8 genau am Übergang zur benachbarten Vertiefung 9 (Hochbett) liegt.

Die Innenwand des Felgenkranzes kann in Richtung auf die Mittelebene hin ohne Absatz und unter gleichem Neigungswinkel bezüglich der Axialrichtung von der Sitzfläche 8 zur benachbarten Vertiefung 9 übergehen, die keine kleinere Quererstreckung haben sollte als die Sitzfläche 8. Die Vertiefung 9, die mit den beschriebenen Abmessungen einen minimalen Einbauraum für den Reifen ergibt, dient dazu, den Reifen mit seinen zug- und druckfesten Drahtkernen 2 auch bei einteiligen Felgen montieren zu können. Nach der Montage kann die Vertiefung 9 mittels eines Füllrings 10 aus Gummi, Kunststoff oder einem anderen geeigneten Material ausgefüllt werden, um Schmutz- und Wasseransammlungen zu verhindern. Im montierten Zustand verlaufen die Reifenwände von den Wulstkernen 2 aus zunächst im wesentlichen waagerecht nach außen, um seitlich außerhalb vom Felgenkranz in Form einer Wölbung in die Seitenwände 11 überzugehen.

Axial innen werden die Montagevertiefungen 9 (Hochbetten) von im wesentlichen senkrechten Seitenwänden 12 eines radial außen liegenden Tiefbetts 13 begrenzt.

Der Tiefbettboden 14 verläuft in Querrichtung geneigt, wobei die Neigung in einem Bereich bis 15° gegenüber der Waagerechten liegen kann. Radial innen entspricht der größte Durchmesser des Tiefbettbodens 14 etwa dem radial inneren Reifendurchmesser im Bereich der Reifenwülste 3. Auf der anderen Seite befindet sich in Verlängerung des Tiefbettbodens 14 nach axial außen hin ein Schutzring 15, der Bestandteil der Felge ist und der unmittelbar in die Felgenschüssel 16 übergeht. Auf Höhe des benachbarten Felgenhorns 7 sollte zwischen Schutzring 15 und Felgenhorn 7 ein Abstand liegen, der etwa der 1,5- bis dreifachen Reifenwulstdicke entspricht, um ein ungehindertes Einführen des Reifenwulstes 3 und gegebenenfalls von Werkzeugen zu Montagezwecken zu ermöglichen.

Aufgrund des sehr flachen Tiefbetts 13 und durch die seitliche Anordnung der Felgenschüssel 16 ergibt sich ein optimaler Einbauraum für die Bremsaggregate. Durch das extrem seitlich äußere Anbringen der Felgenschüssel 16 erhalten die in der Nähe der Felgenschüssel 16 befindlichen Bremsaggregate (nicht gezeichnet) einen so großen Abstand vom gegenüberliegenden Reifenwulst 3, daß sich für diesen gegebenenfalls zusätzliche Wärmeschutzmaßnahmen erübrigen. Der der Felgenschüssel 16 benachbarte Reifenwulst 3 ist durch den massiven, metallischen Schutzring 15 mit seinem hohen Wärmeleitvermögen bestens gegen Bremswärmestrahlung geschützt. Durch das Vorsehen eines flachen Tiefbetts 13 mit senkrechten Seitenwänden 12 und einem geneigten Tiefbettboden 14 wird die Formstabilität der Felge wesentlich erhöht.

Radial und axial außen von den senkrechten Seitenwänden 12 des Tiefbetts 13 schließen sich leicht gewölbte Notlaufstützflächen 17 an, auf denen sich der Reifen im Falle eines Defekts abstützen kann. Um unter Beibehaltung eines Tiefbetts 13 möglichst breite Stützflächen 17 zu erhalten, sind diese in der Weise ausgebildet, daß außer den die Vertiefungen 9 bildenden Teilen der Felge auch die die Sitzflächen 8 und die Felgenhörner 7 bildenden Teile radial außen zur Vergrößerung der Stützflächen 17 beitragen.

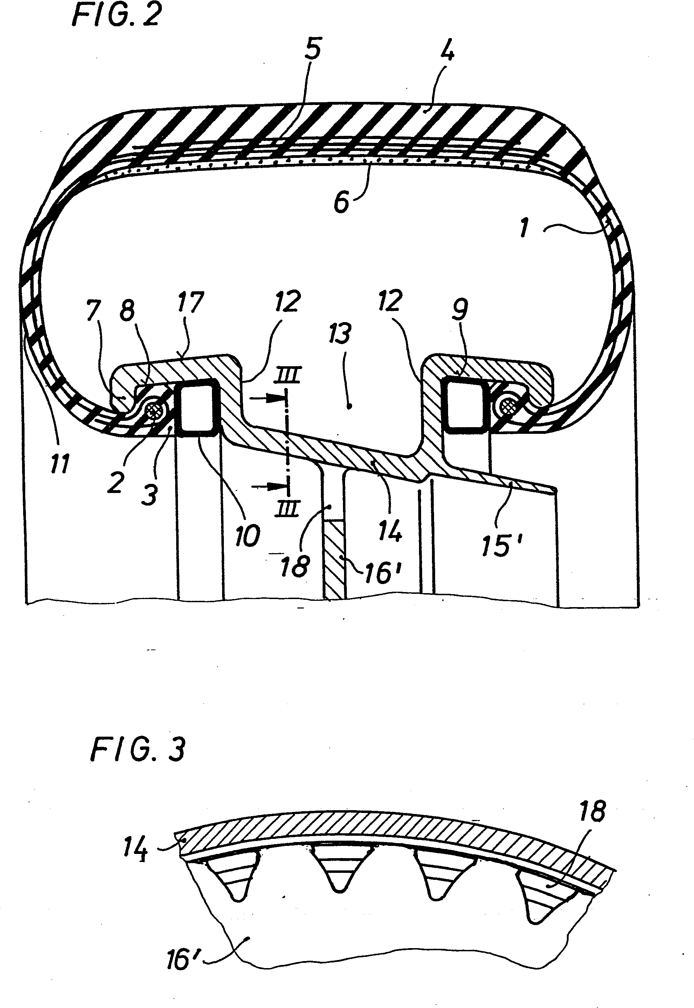

Das Fahrzeugrad gemäß Fig. 2 unterscheidet sich von dem nach Fig. 1 vor allem dadurch, daß die Felgenschüssel 16' mittig vom Tiefbettboden 14 angebracht ist. Die Felgenschüssel 16' kann am Felgenkranz angeschweißt sein, oder aber die Felge kann aus einem Stück gegossen sein.

Ein Schutzring 15' für den einen Reifenwulst 3 befindet sich wiederum in Verlängerung des Tiefbettbodens und ist mit dem übrigen Felgenkranz aus einem Stück hergestellt. Bei Bedarf kann der Schutzring 15' selbstverständlich auch als separates Bauteil lösbar am Felgenkranz angebracht, z.B. angeschraubt sein.

Um Wasseransammlungen im Bereich des Schutzrings 15' zu vermeiden, kann der Schutzring gegenüber der Waagerechten ein wenig geneigt verlaufen oder vereinzelt Löcher aufweisen. Damit sich auf der radial inneren Seite des Felgenkranzes kein Wasser ansammeln kann, befinden sich im Berührungsbereich des Tiefbettbodens 14 mit der Felgenschüssel 16' über den Umfang verteilte Durchbrüche 18 (Fig. 3).

Die Notlaufstützflächen 17 verlaufen bei der Felge gemäß Fig. 2 in Querrichtung gerade und von axial außen nach innen ansteigend, und zwar mit derselben Steigung wie die Sitzflächen 8 und die Vertiefungen 9, so daß die Wandstärke des Felgenkranzes in Querrichtung konstant ist. Die weiteren Teile von Felge und Reifen entsprechen den im Beispiel 1 dargestellten.

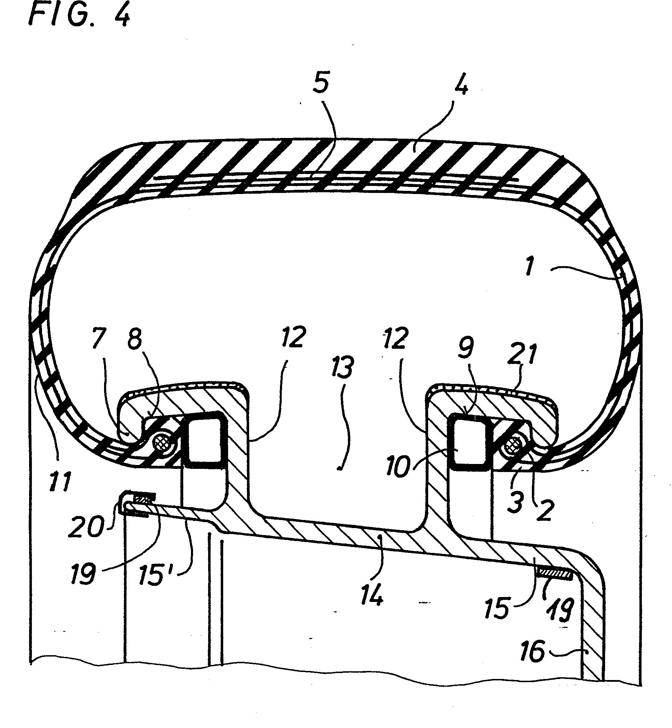

Gemäß Fig. 4 wird ein Fahrzeugrad vorgeschlagen, das auf beiden Seiten in Verlängerung des Tiefbettbodens 14 nach axial außen hin einen Schutzring 15, 15' aufweist. Um auch für den zweiten Reifenwulst 3 einen ausreichenden Einbauraum zu erhalten, wurden die Tiefbettwände 12 ein wenig verlängert und die Neigung des Tiefbettbodens reduziert, so daß der zweite Schutzring 15' einen ausreichenden Abstand vom benachbarten Felgenhorn 7 erhält. Der erste Schutzring 15 geht wie beim Rad nach Fig. 1 unmittelbar in die seitlich außen gelegene Felgenschüssel über. Die beiden Schutzringe 15, 15' dienen aufgrund ihrer Stabilität und ihrer glatten Flächen zur Aufnahme von Ausgleichsgewichten 19, die angeklebt oder mittels Klammern 20 geklemmt werden können.

Auch die Notlaufstützflächen 17 sind wie beim Rad nach Fig. 1 ausgebildet, jedoch zusätzlich mit einem Gleitmittelbelag versehen.

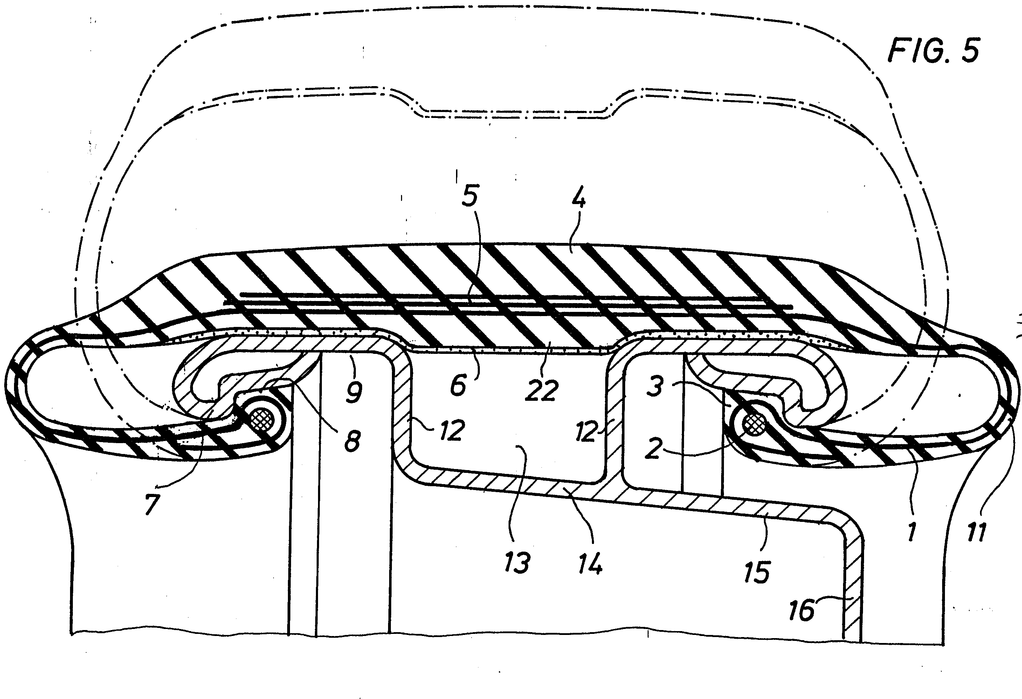

Beim Rad nach Fig. 5 ist der radial innere Teil der Felge mit dem Tiefbett 13, dem Schutzring 15 und der seitlichen Felgenschüssel 16 wie beim Beispiel der Fig. 1 ausgebildet. Dagegen verlaufen die Notlaufstützflächen 17 gerade und waagerecht, und die Felgenhörner 7 und Sitzflächen 8 für den Reifen werden durch nach innen umgebördelte Randteile des Felgenkranzes gebildet, so daß relativ tiefe Montagevertiefungen 9 entstehen. Selbstverständlich kann die gleiche Felgenform auch durch eine Umbördelung der Randteile nach außen erhalten werden.

Der Reifen weist in dem Innenwandbereich, der sich bei einem Notlauf zwischen den Stützflächen 17 befindet, eine als Führung dienende Wandverdickung 22 auf, die ein wenig in das Tiefbett 13 hineinragt und dafür sorgt, daß der Reifen bei einem Notlauf mittig auf der Felge gehalten wird. Statt der relativ breiten Verdickung 22 können zur Gewichtsreduzierung selbstverständlich auch zwei schmale, umlaufende Stege auf Höhe der Tiefbettränder gewählt werden.

Es sollte angemerkt werden, daß das erfindungsgemäße Rad nicht auf die vorstehend beschriebenen Beispiele beschränkt ist. So können die Schutzringe 15, 15' sich auch an anderen Stellen befinden und lösbar wie auch unlösbar an der Felge befestigt sein. Die Felge kann einteilig, aber auch mehrteilig ausgebildet sein, und das Rad kann für PKW, aber auch für LKW ausgelegt sein. Schließlich ist die Erfindung nicht auf die Verwendung von Gürtelreifen beschränkt.

Die Montage des Reifens erfolgt nach einem bei der Anmelderin praktizierten Verfahren, gemäß dem die Felge zunächst bei nach außen geklappten Reifenwülsten senkrecht zum Reifen auf diesen zubewegt und dann im Reifeninnenraum gedreht wird. Die weitere Montage kann wie beim Rad gemäß DE-OS 30 00 428 erfolgen.

Ansprüche

1. Luftbereiftes Fahrzeugrad mit einer starren Tiefbettfelge und mit einem Fahrzeugluftreifen aus Gummi oder gummiähnlichen Kunststoffen, der eine Karkasse aufweist, die in den Wülsten durch Umschlingen von zug- und druckfesten Wulstkernen verankert ist, bei dem die Felge sich im wesentlichen radial nach innen erstreckende Felgenhörner und neben diesen am radial inneren Umfang Sitzflächen für den Reifen und neben den Sitzflächen Montagevertiefungen (Hochbett) aufweist, die von den Seitenwänden des Tiefbetts begrenzt werden, bei dem die die Montagevertiefungen bildenden Teile des Felgenkranzes auf der radial äußeren Seite als Notlaufstützflächen ausgebildet sind und bei dem die Reifenwände sich von den Wulstkernen aus zunächst im wesentlichen waagerecht nach außen erstrecken, dadurch gekennzeichnet, daß von zumindest einer der Wände (12) des Tiefbettes (13) ein Schutzring (15, 15') ausgeht, dessen Wand in Querrichtung im wesentlichen nach axial außen verläuft und den Reifenwulst (3) gegen Bremswärmeeinstrahlung schützt.

2. Fahrzeugrad nach Anspruch 1, dadurch gekennzeichnet, daß der Tiefbettboden (14) in Querrichtung geneigt verläuft, und zwar mit Neigungswinkeln von bis zu 15$^{\circ}$, und daß der Schutzring (15, 15') als Verlängerungsteil des Tiefbettbodens (14) ausgebildet ist.

3. Fahrzeugrad nach Anspruch 2, dadurch gekennzeichnet, daß der Schutzring (15) axial außen unmittelbar in die senkrecht verlaufende Felgenschüssel (16) übergeht.

4. Fahrzeugrad nach Anspruch 1, dadurch gekennzeichnet, daß die Felgenschüssel (16') am Boden (14) des Tiefbetts (13) angebracht ist und im Berührungsbereich mit dem Boden (14) über den Umfang verteilte Durchbrüche (18) aufweist.

5. Fahrzeugrad nach Anspruch 1, dadurch gekennzeichnet, daß der Schutzring (15, 15') einen radialen Abstand vom benachbarten Felgenhorn (7) aufweist, der der 1,5- bis dreifachen Reifenwulstdicke entspricht.

6. Fahrzeugrad nach Anspruch 1 oder 2, dadurch gekennzeichnet, daß der Tiefbettboden (14) auf der radial inneren Seite einen größten Durchmesser aufweist, der etwa an den radial inneren Reifendurchmesser im Bereich der Reifenwülste (3) heranreicht.

7. Fahrzeugrad nach Anspruch 1, dadurch gekennzeichnet, daß die Felge auf jeder Seite einen Schutzring (15, 15') aufweist.

8. Fahrzeugrad nach Anspruch 1, dadurch gekennzeichnet, daß die Sitzflächen (8) für den Reifen in Querrichtung nach axial innen ansteigend verlaufen und in Vertiefungen (9) mit im wesentlichen gleicher Neigung und Breite übergehen.

9. Fahrzeugrad nach Anspruch 1, dadurch gekennzeichnet, daß die die Sitzflächen (8) für den Reifen bildenden Teile des Felgenkranzes auf der radial äußeren Seite ebenfalls als Notlaufstützflächen (17) ausgebildet sind.

10. Fahrzeugrad nach Anspruch 1, dadurch gekennzeichnet, daß die das Felgenhorn (7) bildenden Teile des Felgenkranzes auf der radial äußeren Seite ebenfalls als Notlaufstützflächen (17) dienen.

11. Fahrzeugrad nach Anspruch 1, dadurch gekennzeichnet, daß die Notlaufstützflächen (17) in Querrichtung leicht gewölbt verlaufen.

12. Fahrzeugrad nach Anspruch 1, dadurch gekennzeichnet, daß die Notlaufstützflächen (17) in Querrichtung gerade verlaufen, und zwar waagerecht oder leicht nach außen abfallend.

13. Fahrzeugrad nach Anspruch 1, dadurch gekennzeichnet, daß die Felgenhörner (7) und die Sitzflächen (8) für den Reifen von umgebördelten Teilen des Felgenkranzes gebildet werden.

0139905

14. Fahrzeugrad nach Anspruch 1, dadurch gekennzeichnet, daß der Reifen in dem Innenwandbereich, der bei einem Notlauf zwischen den Stützflächen (17) liegt, eine als Führung dienende Wandverdickung (22) aufweist.

15. Fahrzeugrad nach Anspruch 1, gekennzeichnet durch ein am Schutzring (15, 15') angebrachtes Ausgleichsgewicht (19).

Hannover, den 25. August 1983
Sr/Fr                83-43 P/Sr

FIG. 1

Continental
Gummi-Werke AG
Hannover

FIG. 2

FIG. 3

Continental
Gummi — Werke
Hannover

83- 43 P

FIG. 4

Continental
Gummi−Werke AG
Hannover

FIG. 5

Continental
Gummi-Werke AG
Hannover